# DEMANDE DE BREVET EUROPEEN

(11) **EP 1 932 813 A1**
(43) Date de publication de la demande: **18.06.2008**
(21) Numéro de dépôt: 06126172.3
(22) Date de dépôt: 14.12.2006
(51) Int. Cl.: C03C 15/00, C03C 17/00, C03C 17/02, C03C 17/28, C03C 17/34, C03C 19/00, B32B 17/10

(54) **Panneau lumineux transparent**

(71) Demandeur: AGC Flat Glass Europe SA, 1170 Bruxelles (BE)
(72) Inventeur: Lefevre, Hugues, 6040 Jumet (BE); Luijkx, Antoine, 6040 Jumet (BE)
(74) Mandataire: Decamps, Alain René François

(57) **Abrégé**

Panneau lumineux transparent comprenant un substrat rigide transparent et des diodes électroluminescentes dans lequel sont incorporés des moyens de dissimulation des diodes et de leurs connexions électriques.

## Description

La présente invention concerne un panneau lumineux transparent éclairé par des diodes électroluminescentes ("LED's") intégrées au panneau.

On connaît un dispositif d'éclairage comprenant un panneau de support transparent en verre revêtu de bandes conductrices de l'électricité sur lesquelles sont montées des diodes électroluminescentes émettant leur lumière au travers du support transparent (brevet US 6,270,236 B1).

Ce dispositif connu apparaît toutefois comme un panneau formé d'une multitude de points lumineux très brillants au droit des diodes luminescentes séparées par des zones sensiblement plus sombres. Il en résulte un effet peu propice à l'utilisation du panneau dans les applications d'éclairage ou de décoration.

L'invention remédie à cet inconvénient en fournissant un panneau lumineux comprenant une multitude de LED's générant des radiations lumineuses, dans lequel l'impact visuel des LED's brillantes est masqué, ou tout au moins, sensiblement atténué.

A cet effet, l'invention concerne un panneau lumineux tel que défini dans la revendication 1.

Les revendications dépendantes définissent d'autres formes possibles de réalisation de l'invention, dont certaines sont préférées.

Le panneau lumineux selon l'invention est un panneau lumineux transparent, c'est-à-dire hautement transmissif par rapport au rayonnement lumineux correspondant aux longueurs d'onde du spectre de la lumière visible.

Selon l'invention, le panneau lumineux comprend un substrat rigide transparent. Par substrat rigide, on entend désigner un corps plein de forme plate, c'est-à-dire de faible épaisseur comparée à ses autres dimensions et de résistance mécanique aux sollicitations de flexion et de torsion suffisante pour ne pas se déformer sous l'action de sollicitations extérieures que l'on rencontre couramment dans le milieu ambiant dans lequel on utilise généralement le panneau. En particulier, les substrats rigides utilisés résistent généralement bien au vent, et aux intempéries en général, que l'on rencontre dans les milieux d'utilisation de ces panneaux, y compris la glace et la neige. Le substrat peut se présenter sous la forme d'une plaque rigide constituée d'un matériau unique ou au contraire être le résultat d'un assemblage de plusieurs feuilles ou plaques du même matériau ou de matériaux différents collés ou soudés les uns aux autres. Des exemples sont des plaques transparentes en matière plastique ou en verre. Les matières transparentes aux longueurs d'ondes du spectre de la lumière visible sont préférées. Parmi celles-ci, les verres inorganiques traditionnels sont préférés, en particulier les verres sodo-calciques. De préférence, le substrat comprend au moins une feuille de verre inorganique

Le panneau lumineux conforme à l'invention comprend aussi une multitude de diodes électroluminescentes (LED's) qui génèrent des radiations lumineuses. Par radiations lumineuses, on entend aussi bien celles qui appartiennent au spectre visible que celles qui sont extérieures à celui-ci. Ces radiations peuvent être parfaitement monochromatiques ou, au contraire, se distribuer sur une ou plusieurs bandes de fréquences, contiguës ou non. Les longueurs d'onde des radiations lumineuses émises peuvent aussi être étrangères à celles peuplant le spectre visible, éventuellement avec des radiations appartenant à ce spectre. Ce sont par exemple des diodes LED émettant dans le spectre visible, des diodes UV et/ou visible et/ou IR. Les radiations lumineuses générées par les LED's ont une longueur d'onde comprise entre 200 nm et 1 mm. De préférence, les radiations lumineuses sont des radiations appartenant au spectre visible. Les radiations lumineuses émises par les LED's peuvent aussi avantageusement comprendre au moins une partie du spectre visible et au moins une partie du spectre infrarouge et/ou ultraviolet.

Selon l'invention, le panneau comprend aussi des moyens de dissimulation des LED's et de leurs connexions électriques. Par connexions électriques, on désigne les parties métalliques dépassant du boîtier des diodes ou recouvrant une partie de la surface inférieure de ce boîtier dans le cas de composants électroniques à montage de surface qui permettent de raccorder le boîtier de la LED à ses amenée et évacuation de courant électrique d'alimentation.

Selon une forme de réalisation de l'invention, les moyens de dissimulation sont choisis parmi les écrans opaques et les écrans translucides. Par écran opaque ou translucide, on désigne ici une matière interposée entre l'oeil de l'observateur et les LED's du panneau qui filtre totalement les radiations lumineuses (cas opaque) ou introduit un facteur important de dispersion de ces radiations (cas translucide).

Une première forme de réalisation des écrans consiste, dans le cas opaque, à utiliser un substrat sur lequel des points de peinture opaque ont étés déposés au droit de chaque LED. De préférence, ces points de peinture peuvent avoir été appliqués par sérigraphie. De préférence, on utilise sélectionne une peinture de couleur sombre et/ou de pouvoir couvrant élevé. Alternativement, on peut aussi utiliser un substrat sur lequel la peinture des points est un émail qui a subi une cuisson dans un four après son application sur le substrat. Cette dernière technique est préférée lorsque le substrat peint se confond avec une surface extérieure au panneau, car elle a l'avantage de fournir un panneau dont la peinture a un caractère plus durable. Le diamètre des points de peinture ou d'émail est semblable à celui de la plus grande dimension de la surface du substrat couverte par une LED et ses connexions électriques. De préférence, ce diamètre est supérieur d'environ 5 à 10% à cette plus grande dimension.

Dans le cas translucide, les écrans consistent en un matage du substrat recouvrant une zone de la surface du substrat plus grande que la surface couverte par les LED's et leurs connexions électriques. Il peut parfois être avantageux, dans le cas translucide, que la surface du substrat qui est matée soit plus grande que celle de la surface couverte par les LED's et leurs connexions électriques et suffisamment grande pour masquer aussi la seconde réflexion provenant de l'autre face du substrat par rapport à la face qui reçoit le rayon lumineux incident des LED's et de leurs connexions électriques. On préfère généralement aussi que le substrat comprenne au moins une feuille de verre et que ce matage du substrat résulte d'une attaque localisée du verre par un acide fluorhydrique ou une solution aqueuse en contenant.

En variante, dans le cas translucide, le matage du substrat peut aussi résulter d'un sablage localisé de ce substrat.

Selon une autre forme de réalisation du panneau lumineux transparent conforme à l'invention, une feuille en matière plastique peut avoir été laminée avec le substrat. De préférence, la matière plastique de la feuille est sélectionnée parmi les polyesters thermoplastiques. Parmi ces derniers, on préfère tout particulièrement le polyvinylbutyral, les copolymères d'éthylène et d'acétate de vinyle et les polyéthylènetéréphtalates.

## Revendications

1. Panneau lumineux transparent comprenant un substrat rigide transparent et des diodes électroluminescentes (LED's), **caractérisé en ce que** des moyens de dissimulation des LED's et de leur connexions électriques sont incorporés au panneau.

2. Panneau lumineux selon la revendication précédente, **caractérisé en ce que** les moyens de dissimulation sont choisis parmi les écrans opaques et les écrans translucides.

3. Panneau lumineux selon la revendication précédente, **caractérisé en ce que** les écrans opaques consistent en une peinture opaque en forme de points dont le diamètre est semblable à celui de la plus grande dimension de la surface du substrat couverte par une LED et ses connexions électriques.

4. Panneau lumineux selon la revendication précédente, **caractérisé en ce que** les points de peinture ont été appliqués sur le substrat par sérigraphie.

5. Panneau lumineux selon une quelconque des revendications 3 et 4, **caractérisé en ce que** la peinture est un émail qui a subi une cuisson dans un four après son application sur le substrat.

6. Panneau lumineux selon la revendication 2, **caractérisé en ce que** les écrans translucides consistent en un matage du substrat recouvrant une zone de la surface du substrat plus grande que la surface couverte par les LED's et leurs connexions électriques.

7. Panneau lumineux selon la revendication précédente, **caractérisé en ce que** le substrat comprend au moins une feuille de verre et le matage du substrat résulte d'une attaque localisée du verre par un acide fluorhydrique.

8. Panneau lumineux selon la revendication 7, **caractérisé en ce que** le matage du substrat résulte d'un sablage localisé du substrat.

9. Panneau lumineux selon une quelconque des revendications précédentes, **caractérisé en ce qu'**au moins une feuille en matière plastique a été laminée sur le substrat.

10. Panneau lumineux selon la revendication précédente, **caractérisé en ce que** la matière plastique est un polyester thermoplastique.

11. Panneau lumineux selon la revendication précédente, **caractérisé en ce que** le polyester est choisi parmi le polyvinylbutyral, les copolymères d'éthylène et d'acétate de vinyle et les polyéthylènetéréphtalates.
